# EUROPEAN PATENT APPLICATION

(11) **EP 2 749 371 A1**
(43) Date of publication of application: **02.07.2014**
(21) Application number: 12290464.2
(22) Date of filing: 31.12.2012
(51) Int. Cl.: B23H 7/10, B23H 1/02

(54) **Wire electrical discharge machine for machining a conductor element such as a metal piece**

(71) Applicant: Centre National de la Recherche Scientifique (CNRS), 75016 Paris (FR); Université d'Aix Marseille, 13007 Marseille (FR)
(72) Inventor: Vigeolas, Eric, 13008 Marseille (FR)
(74) Representative: Macquet, Christophe

(57) **Abstract**

The invention relates to an electrical discharge machine (EDM) (1) for machining a conductor element such as a metal piece, the machine comprising a cutting wire (5) that is paid out from an upstream coil (6) to a downstream reception member. The machine (1) comprises a carrier means (13) that is provided with an orifice (100) for the metal piece to pass and is equipped with guiding means (18, 18'), such as a plurality of return pulleys (18, 18') for said cutting wire (5). Another aspect of the invention relates to a method of machining a conductor element wherein the cutting wire (5) is guided to multiple tangent points around of the conductor element. The multiplication of tangent points results in higher machining speeds that are directly proportional to a number of passes of the cutting wire (5). Through simple, reliable and inexpensive means, the invention allows producing tridimensional parts on conventional wire cutting machines.

## Description

The invention relates to an electrical discharge machine (EDM) for machining a conductor element such as metal piece by removing conductor material from the conductor element by means of electrical discharges between an electrode and the conductor element that is immersed in an electrolytic liquid, the machine comprising a cutting wire that is paid out from an upstream coil to a downstream reception member. The invention relates also to a method of manufacturing a conductor element, such as any revolution element, in particular a metal piece, with the use of such a machine. The invention relates also to a metal element obtained from the implementation of such a manufacturing method.

The EDM machining process is a method for removing material by vaporization under the effect of electric shocks. Two methods exist and are reproduction form by ripping and cutting wire method. The cutting wire technique relates to the use of a stretched wire which is movable over a piece (generally plates) in order to cut out shapes the piece. This technique is used for the machining of complex shapes if and only if they are formed of ruled surfaces (rectilinear generators). To ensure the cutting wire against its wear, the wire is held constantly between two coils.

The document FR 2.796.323 describes a method of machining a piece by electro-erosion using an electrical discharge machine of the wire cutting type. The piece is subjected to a rotary movement of the piece on itself about its symmetry axis. The machining method consists of moving the piece with respect to the cutting wire, said movement being the combination of the rotary movement about the symmetry axis of the piece and a translation on a curve contained in a plane substantially orthogonal to the cutting wire. The machining of the piece is done using a removal of the material from the piece. This removal of material takes place at a unique tangent to the rotation movement of the piece. It is possible on this EDM to rotate the metal piece, thus performing a turning operation.

Nevertheless, this type of process has several problems. One of them is related to the method of micro-turning itself. Indeed, since the metal piece is rotatable, only the metal parts of small dimensions can be machined. Another problem lays in the fact that there is an important need to have an accurate position of the cutting wire with respect to the axis of rotation of the metal part in order to ensure the machining accuracy. In addition, this type of EDM has a relatively low speed machining (i.e. material removal) which increases the production costs.

One aim of the present invention is to provide an electrical discharge machine EDM for machining any conductor material, particularly in order to produce a metal piece of revolution, such as a tube of slight thickness, for example inferior to 1 mm, and more particularly inferior to 10 microns, said thickness in addition being variable along the metal piece. Another aim of the invention is to propose a machining method that is simple to implement and minimises removal of material during machining of the metal piece in order to save on said material and in order to increase the speed of machining device. Another aim of the present invention is to propose a metal element obtained from the implementation of such a machining method the metal element being in particular produced from a material that is difficult to machining or to extrude. Another aim of the present invention is to provide such a conductor element that can be arranged as any revolution part, i.e. as a tube.

An electrical discharge machine of the present invention is a machine for machining a conductor element such as a metal piece. The machine comprises a cutting wire that is paid out from an upstream coil to a downstream reception member.

One object of the invention is to provide an electrical discharge machine for machining a conductor element such as metal piece by removing material from said element by means of electrical discharges between an electrode and the element that is immersed in a electrolytic liquid. The machine comprises a cutting wire that is paid out from an upstream coil to a downstream reception member.

According to the present invention, the machine comprises at a plurality of guiding means for guiding the cutting wire around the conductor element through at least a plurality of tangency zones between said wire and said conductor element. The machine of the invention further comprises at least a carrier means provided with a passage orifice for the conductor element, the guiding means being arranged on the carrier means.

In other words, the EDM comprises at least a carrier means, for example a plate, that is provided with a passage orifice for the conductor element and is equipped with guiding/wiring means for the cutting wire.

The cutting wire is circulated around the wiring means so that said cutting wire is tangent to the metal piece at at least two contact points, preferentially a plurality of contact points.

The advantage of the machine of the invention is to machining over multipoint configuration around any revolution element with the help of a unique cutting wire, increasing, thus, the machining speed. The invention permits to enhance the machining accuracy by positioning the cutting wire and the conductor material through a single interface/plate (in the preferred embodiment of the invention).

The wiring means preferentially comprise return pulleys and the return pulleys preferentially comprise a plurality of movable return pulleys.

The number of movable return pulleys is preferentially even.

The return pulleys preferentially comprise at least one fixed return pulley.

Preferentially, each movable return pulley is equipped with a respective support that is able to move in translation in a groove formed inside the carrier means.

The return pulleys preferentially are placed in a pulley plane that is parallel to a plate plane and is orthogonal to a symmetry axis of the metal piece.

The carrier means is preferentially a plate and the plate is preferentially conformed as a disc comprising a plate centre that is provided with the passage orifice.

The grooves are advantageously centripetal.

For example, the grooves are either radial or tilted relatively to a radial position/axis. The diameter of the portion to be machined is determined by the radial position of the pulleys.

The movable return pulleys are advantageously arranged on a first circle of first radius and first centre, the first centre being merged with the plate centre.

The machine comprises advantageously a device for moving all the movable return pulleys according to a single degree of freedom.

The machine comprises advantageously a second device for rocking the plate about a median position.

The machine advantageously comprises means for translating the metal piece along the symmetry axis of the metal piece and means of rotating the metal piece on the symmetry axis of the metal piece.

A method of obtaining a metal piece using such an electrical discharge machine is mainly recognisable in that the obtaining method comprises a step of circulating the cutting wire around the return pulleys so that the cutting wire is tangent to the metal piece at a plurality of contact points. The obtaining method comprises preferentially a step during which the first radius varies.

A metal element of the present invention is mainly recognisable in the metal element is obtained from such an obtaining method.

Other features and advantages of the present invention will emerge from a reading of the description that will be made of example embodiments, in relation to the figures in the accompanying drawings, in which:
Figure 1 is a front view of an electrical discharge machine of the present invention and Figure 2 is a side view of the machine illustrated in the previous figure.
Figure 3 is a side view of the machine shown in figure 2 that comprises a plate for guiding an cutting wire.
Figure 4 is a detail view of a movable return pulley that the machine illustrated in the previous figures comprises.
Figures 5, 6 and 7 are front views of the plate shown in figure 3.
Figures 8 and 9 are perspective views of a metal piece obtained from the use of a machine shown in figures 1 to 3.

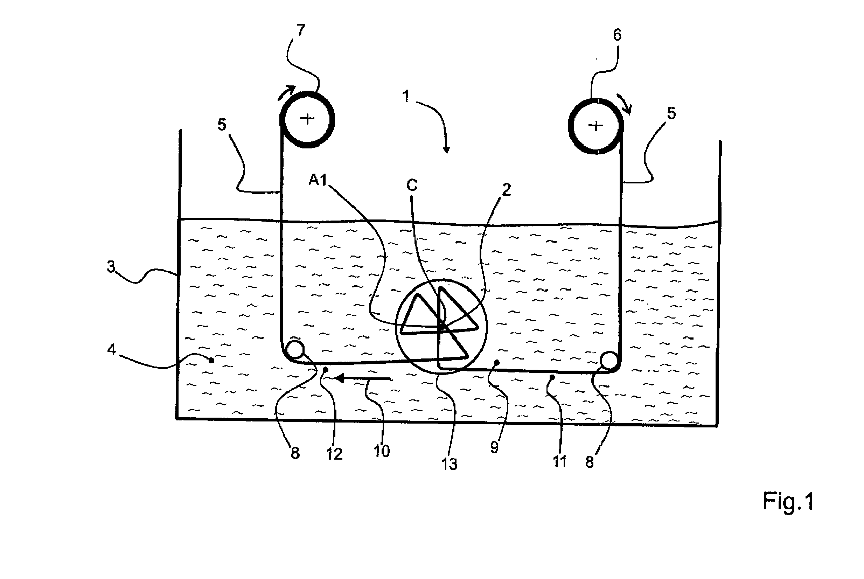

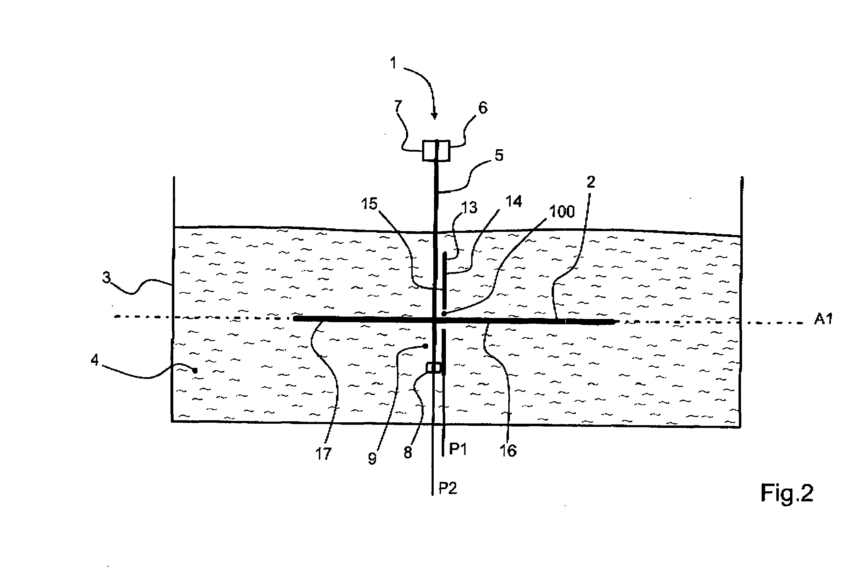

In figure 1 and figure 2, an electrical discharge machine 1 for machining a conductor element, such as a metal piece 2 in this example, is shown respectively in front and side view. The machine 1 enables material to be removed from the metal piece 2 by vaporisation under the effect of electrical discharges. The machine 1 makes it possible to produce conductor elements of revolution, such as a bar, from a removal of material from the metal piece 2 that is minimised. The machine 1 makes it also possible to produce metal elements that have geometrical shapes that are not of revolution.

The machine 1 comprises a vessel 3 containing an electrolytic liquid 4, such as demineralised and deionised water. The vessel 3 also houses the metal piece 2, which is immersed in the electrolytic liquid 4. The electrical discharges are produced between the metal piece 2 and an electrode immersed in electrolytic liquid 4.

The metal piece 2 is preferentially a piece of revolution, such as a tube or bar. The metal piece 2 has a symmetry axis A1 on which the metal piece 2 is able to move in translation through the action of translation means that are not shown in the figures. The metal piece 2 is also able to move in rotation on itself on its symmetry axis A1 by means of rotation means that are also not shown in the figures. As a result the metal piece 2 can be subjected to a movement combining a rotation and a translation on its symmetry axis A1.

The machine 1 also comprises a cutting or electro-erosion wire 5 that is paid out from an upstream coil 6 to a downstream reception member 7. The downstream reception member 7 can consist either of a paying-out device or a downstream coil, as shown in figures 1 and 2. The cutting wire 5 is paid out constantly and progressively in order to minimise wear on it.

The machine 1 optionally comprises at least one guide pulley 8 that is intended to guide the cutting wire 5 from the upstream coil 6 to the downstream reception member 7. According to the variant embodiments shown in figures 1 and 2, two guide pulleys 8 are placed on a passage path 9 where the cutting wire 5 passes from the upstream coil 6 to the downstream reception member 7. The passage path 9 consists of a space enclosing the cutting wire 5 from the upstream coil 6 as far as the downstream reception member 7. Inside the passage path 9, the cutting wire 5 moves in a circulation direction 10 from an upstream area 11 to a downstream area 12 of the passage path 9.

The machine 1 comprises furthermore a carrier means 13. This carrier means is advantageously a plate or a turntable 13 that is housed inside the passage path 9 of the cutting wire 5.

Nevertheless, according to other embodiments of the invention, the carrier means may be of various conformations. For example, it may be made of rods forming arms for maintaining the various elements and devices that will be disclosed hereunder in connection with the preferential embodiment of the invention wherein the carrier means is a plate.

The plate 13 is for example conformed as a slab that has an upstream face 14 that is placed in front of the upstream area 11 and a downstream face 15 that is placed in front of the downstream area 12. The plate 13 is preferably shaped as a disc having a plate centre C. The plate 13 has a passage orifice 100 that is preferentially formed at the plate centre C. The passage orifice 100 of the metal piece 2 is formed so that, in the machining position of the metal piece 2, the latter extends on either side of the plate 13. In other words, in the machining position of the metal piece 2, the metal piece 2 comprises an upstream part 16 that is placed in front of the upstream face 14 and a downstream part 17 that is placed in front of the downstream face 15. The plate 13 is preferentially placed in a plate plane P1 that is formed orthogonally to the symmetry axis A1 of the metal piece 2 in the machining position.

The plate 13 is provided on one of its faces, either the upstream face 14 or the downstream face 15, with a plurality of guiding/wiring means 18, 18' for the cutting wire 5. The wiring means 18, 18' are preferably made of return pulleys 18, 18'. The guiding means can also be made of hooks or equivalent means. The return pulleys 18, 18' are arranged inside the pulley plane P2, which is preferentially parallel to the plate plane P1. These arrangements are such that the cutting wire 5 circulates from one of the return pulleys 18, 18' to the other inside the pulley plane P2.

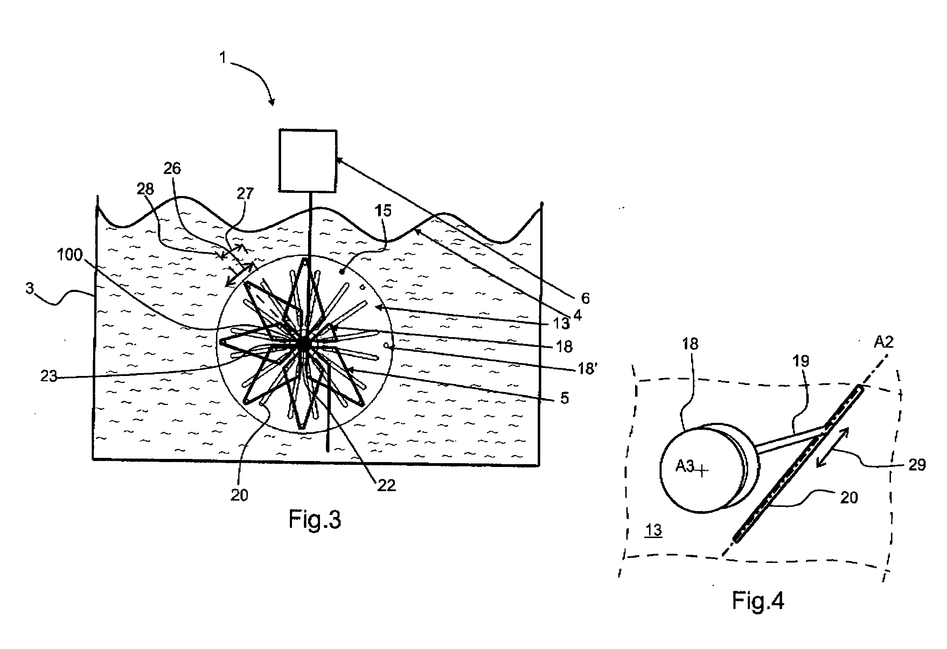

Referring also to figure 4, the return pulleys 18, 18' comprise movable return pulleys 18. Preferably, the number of movable return pulleys 18 is even to guarantee the uniformity of metal removal. Each movable return pulley 18 is carried by a respective support 19 that is able to move in a groove 20 formed in the plate 13. The support 19 is able to circulate in the groove 20 in order to place the movable pulley 18 that is allocated to it in different positions of the pulley plane P2. Each support 19 is able to move in translation in the groove 20. The latter is formed along a groove axis A2 that is orthogonal to a pulley axis A3 on which the movable pulley 18 is able to move in rotation. The pulley axis A3 is orthogonal to the pulley plane A2.

The return pulleys 18, 18' preferentially comprise fixed return pulleys 18' that are attached to the plate 13 and are immobile with respect to the latter. The fixed return pulleys 18' are intended to facilitate a guidance of the cutting wire 5 in the pulley plane P2 in order to prevent a passage of the cutting wire 5 through the metal piece 2 and through the movable return pulleys 18.

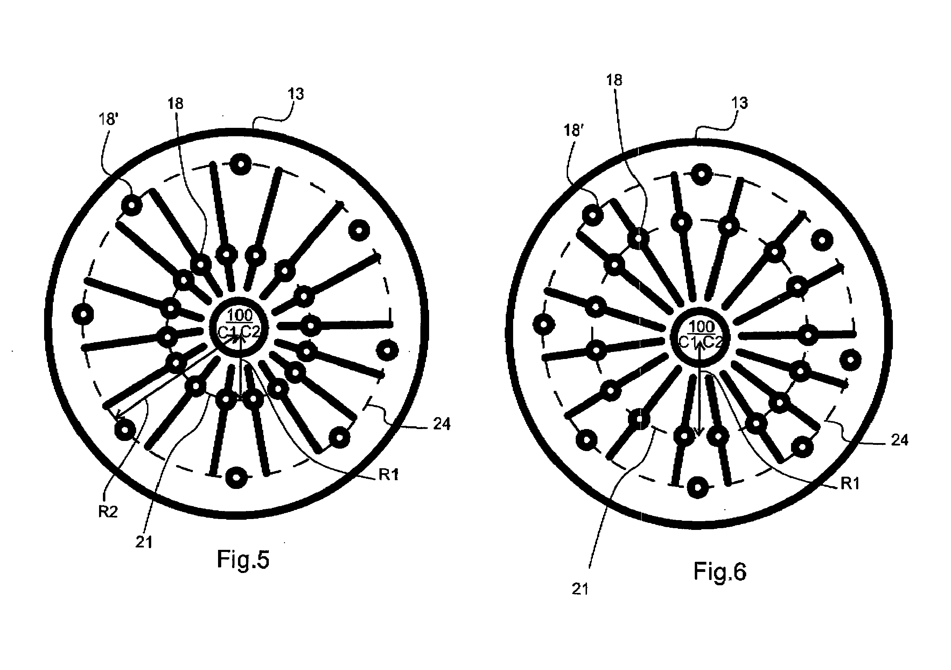

According to a preferred embodiment of the present invention shown in figures 5 and 6, the movable return pulleys 18 are distributed symmetrically about the passage orifice 100 so as to surround the passage orifice 100. Preferentially, the movable return pulleys 18 are distributed on a first circle 21 of first radius R1 and first centre C1. Preferentially again, the passage orifice 100 of the metal piece 2 through the plate 13 is placed at the first centre C1 of the first circle 21. These arrangements are such that the movable return pulleys 18 symmetrically encircle the passage orifice 100. The result finally is that the cutting wire 5 circulating from one of the movable return pulleys 18 to the other is tangent to the metal piece 2 at a plurality of contact points 22, which are for example uniformly distributed at a substantially circular periphery 23 of the metal piece 2.

According to the preferred embodiment of the present invention, the fixed return pulleys 18' are distributed symmetrically around the passage orifice 100. Preferentially, the fixed return pulleys 18' are distributed on a second circle 24 of second radius R2 and second centre C2. These arrangements are such that the fixed return pulleys 18' symmetrically encircle the passage orifice 100. Preferentially again, the orifice 100 for the metal piece 2 to pass through the plate 13 is placed at the second centre C2 of the second circle 24. In other words, the first circle 21 and the second circle 24 are preferably concentric. According to one method of obtaining the metal element by using such a machine 1, the cutting wire 5 circulates only along the movable return pulleys 18 and not along the fixed return pulleys 18', in order to minimise a thickness E of the metal element.

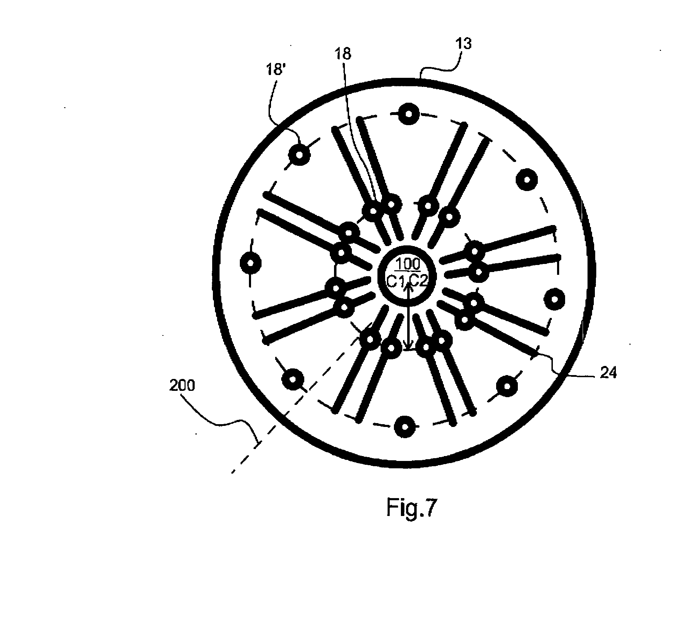

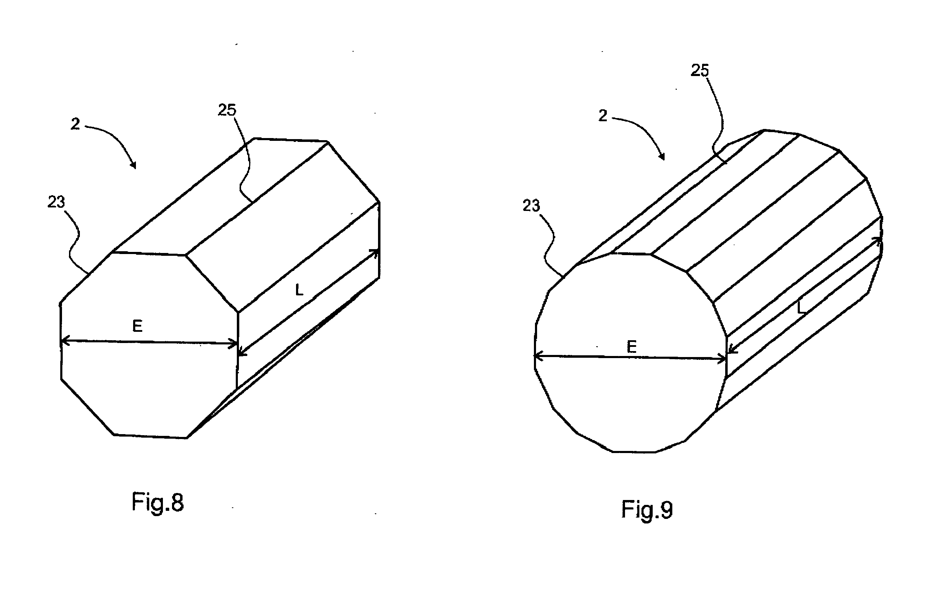

From a translation of the movable return pulleys 18 along their respective groove 20, the first radius R1 varies so that the thickness E of the metal element, as illustrated in figures 7 and 8, also varies. The minimum value of the thickness E is determined by the radius of curvature of the movable return pulleys 18. In other words, by increasing the first radius R1 of the first circle C1, the thickness E can be closed to zero. A contrario, the maximum value of the thickness E can be obtained by tilting the grooves 20 relatively to a radial position 200. For example, two adjacent grooves 20 can be parallel to each other. Such a thickness E is also able to vary along a length L of the metal piece 2 from a variation in the first radius R1 and the translation movement metal of the piece 2 along its symmetry axis A1. There are two possible ways to implement the machine 1. The first way is to drive the movable return pulleys 18 with a unique grooved piece. This guide is made by rotation of the grooved piece which gives to the machine 1 a single degree of freedom. This first way provides the advantage of simplifying the control and consequently increasing the accuracy of the method for the implementation of metal piece of revolution. The second way is to individually control the movable return pulleys 18. This second way allows creating irregular forms.

The metal piece 2 thus obtained is able to have over its length a plurality of peak lines 25 because of a discontinuity of the contact points 22 on the substantially circular periphery 23 of the metal piece 2. According to a preferred variant of the present invention, and as shown in figure 3, the machine 1 comprises a device for rocking 26 the plate 13 in the plate plane P1. More particularly, the device for rocking 26 the plate 13 is able to rock the plate 13 about the passage orifice 100 on either side of a median position 28 and a rocking angle of between 10° and 20°. In particular, the rocking angle is equal to 2n/N, N being the number of movable return pulleys 18. These arrangements aim to plane the peak lines 25 so that the metal piece 2 finally obtained is free of them. The rocking angle 27 depends on the number of movable return pulleys 18. The higher the number of movable return pulleys 18, the smaller the rocking angle 27. Preferably, between two successive rocking movements, the plate 13 undergoes a translation movement by a step corresponding to the thickness E of the metal piece 2. At the same time, the position of the movable return pulleys 18 is adjusted so as to obtain the required periphery 23. The movable return pulleys 18 are in relationship with a device 29 for moving the movable return pulleys 18 that is common to the latter, so that the thickness E of the metal piece 2 depends on a single degree of freedom controlled by the movement device 29. As a result all the movable return pulleys 18 are arranged at the same distance from the plate centre C.

According to a preferred variant embodiment of the present invention, the plate 13 is circular in shape, the passage orifice 100 being positioned at the centre of the plate 13 and the grooves 20 being formed radially in the plate 13.

According to an anther embodiment of the invention, the EDM is provided with two or more plates arranged around the metal piece in several positions, each of said plates comprises pulleys within its surface. The arrangement of the pulleys in one plate can be the same in others plates. It may be interesting also to have a different arrangement of the pulleys from one plate to another in order to realize complex shapes of the conductor element. Different shapes may be obtained, such as non-regular shape, by arranging the pulleys in non-symmetrical way around the conductor element.

All these provisions are such that a rate of machining of the metal piece is proportional to the number of movable return pulleys equipping the plate 13. The result is an ease of machining of the metal piece produced from a strong material difficult to machine, in particular titanium or the like, from an increase in the number of movable return pulleys 18.

All these provisions are also such that the machining precision is optimised from a positioning of the cutting wire 5, which is made dependent on a unique parameter that consists of the degree of freedom of the device 29 moving the movable return pulleys 18. Nevertheless, it is also possible to command the movement of the pulleys independently one from another.

All these provisions are also such that the metal piece 2 thus obtained is produced inexpensively because of a saving in material removed.

Finally, the metal piece 2 thus obtained is able to receive, by welding in particular, components that are attached to the metal piece 2 at an area where the thickness E of the metal piece is the greatest.

## Claims

1. Electrical discharge machine (1) for machining a conductor element such as a metal piece (2) by removing material from said conductor element (2) by means of electrical discharges between an electrode and said conductor element (2) that is immersed in a electrolytic liquid (4), the machine (1) comprising a cutting wire (5) that is paid out from an upstream coil (6) to a downstream reception member (7), **characterised in that** the machine device (1) comprises at least a plurality of guiding means (18, 18') for guiding the cutting wire (5) around the conductor element (2) through at least a plurality of tangency zones between said wire and said conductor element.

2. Machine (1) according to claim 1, wherein at least a carrier means (13) is provided with a passage orifice (100) for the conductor element (2), the guiding means (18, 18') being arranged on the carrier means (13).

3. Machine (1) according to any of claims 1 or 2, **characterised in that** the guiding means (18, 18') comprise return pulleys (18, 18'), the return pulleys (18, 18') comprising a plurality of movable return pulleys (18) and/or at least one fixed return pulley (18').

4. Machine (1) according to claim 3, **characterised in that** the return pulleys (18, 18') are placed in a pulley plane (P2) that is parallel to a plate plane (P1) and is orthogonal to a symmetry axis (A1) of the metal piece (2).

5. Machine (1) according to any one of claims 2 to 4, **characterised in that** each movable return pulley (18) is equipped with a respective support (19) that is able to move in translation in a groove (20) formed inside the carrier means (13).

6. Machine (1) according to any one of the preceding claims 2 to 5, **characterised in that** the carrier means is a plate (13) and that said plate (13) is conformed as a disc comprising a plate centre (C) that is provided with the passage orifice (100).

7. Machine (1) according to any of claims 5 or 6 **characterised in that** the grooves (20) are centripetal.

8. Machine (1) according to claim 7, **characterised in that** the grooves (20) are radial or tilted relatively to a radial position (200).

9. Machine (1) according to any one of claims 6 to 8, **characterised in that** the movable return pulleys (18) are arranged on a first circle of first radius (R1) and first centre (C1), the first centre (C1) being merged with the plate centre (C).

10. Machine (1) according to claims 3 to 9 **characterised in that** the machining device (1) comprises a first device (29) for moving all the movable return pulleys (18) according to a single degree of freedom.

11. Machine (1) according to any one of the preceding claims 2 to 10, **characterised in that** the machine (1) comprises a second device for rocking (26) the carrier means (13) about a median position (28).

12. Machine (1) according to any one of preceding claims 1 to 11, **characterised in that** the machine (1) comprises means for translating the conductor element (2) along the symmetry axis (A1) of the conductor element (2) and means of rotating the conductor element (2) on the symmetry axis (A1) of the conductor element (2).

13. Method of obtaining a conductor element such as a metal piece (2) using an electrical discharge machine (1) according to any one of the preceding claims 1 to 12, **characterised in that** said method comprises a step of circulating the cutting wire (5) around the return pulleys (18) so that said cutting wire (5) is tangent to the conductor element (2) at a plurality of contact points (22) between the conductor element (2) and the cutting wire (5).

14. Method according to claim 13 using a machine according to claim 9, **characterised in that** said method comprises a step during which the first radius (R1) varies.

15. Conductor element obtained using a method according to either one of claims 13 and 14.
